# FASCICULE DE BREVET EUROPEEN

(11) **EP 0 981 478 B1**
(45) Date de publication et mention de la délivrance du brevet: **18.06.2003**
(21) Numéro de dépôt: 99907715.9
(22) Date de dépôt: 16.03.1999
(51) Int. Cl.: B64C 27/35, B64C 27/45, B64C 27/48

(54) **PALE DE ROTOR, NOTAMMENT POUR LE ROTOR ARRIERE ANTICOUPLE D'UN HELICOPTERE**
ROTORBLATT, INSBESONDERE FÜR EINEN HECKROTOR EINES HUBSCHRAUBERS
ROTOR BLADE, IN PARTICULAR FOR HELICOPTER ANTITORQUE TAIL ROTOR

(30) Priorité: 16.03.1998 FR 9803172
(43) Date de publication de la demande: 01.03.2000
(73) Titulaire: Mouille, René, 13090 Aix en Provence (FR)
(72) Inventeur: Mouille, René, 13090 Aix en Provence (FR)
(74) Mandataire: Bonnetat, Christian
(86) Numéro de dépôt international: FR9900581
(87) Numéro de publication internationale: WO99047417

(56) Documents cités:
- EP-A- 0 331 791
- EP-A- 0 549 455
- WO-A-80/02407
- FR-A- 1 593 008
- US-A- 4 886 419

## Description

La présente invention concerne les pales de rotor, notamment celles destinées à un rotor arrière anticouple caréné (fenestron : marque déposée de la société EUROCOPTER) pour hélicoptère. Elle se rapporte plus particulièrement au dispositif d'attache d'une telle pale sur le moyeu dudit rotor.

On sait que les pales de rotor arrière anticouple pour hélicoptère sont généralement encastrées par leur pied sur le moyeu dudit rotor, au moyen de deux paliers, écartés l'un de l'autre le long dudit pied. Elles sont par ailleurs attachées au voisinage du centre du moyeu par des organes élastiquement déformables en torsion, qui permettent la variation d'incidence tout en supportant la force centrifuge s'exerçant sur les pales en rotation.

Suivant le mode de réalisation desdites pales, ces organes élastiquement déformables en torsion sont soit métalliques (par exemple un faisceau de lames superposées en acier inoxydable), soit réalisés en une matière composite fibres-résine (chaque organe élastique pouvant alors être un prolongement d'une pale, elle-même réalisée en matière composite).

Le document FR-A-1 593 008 montre une pale selon le préambule de la revendication 1.

Quel que soit le mode de réalisation de ces organes élastiquement déformables en torsion, ceux-ci constituent les éléments critiques desdits rotors, car ils sont fortement sollicités en traction par la force centrifuge et, surtout, en fatigue de torsion pour la commande en incidence. Aussi, pour réduire les contraintes de torsion et augmenter la durée de vie desdits organes, on est obligé de les allonger au maximum, ce qui augmente en revanche l'encombrement radial du moyeu du rotor.

La présente invention a pour objet de remédier à ces inconvénients, en permettant la réalisation d'un tel rotor, dont l'encombrement radial est faible, tout en éliminant tout risque de rupture des organes élastiquement déformables en torsion.

A cette fin, selon l'invention, la pale de rotor, notamment pour le rotor arrière anticouple d'un hélicoptère, comportant :
- un pied de pale pour être monté rotatif dans le moyeu dudit rotor, pour permettre à ladite pale de tourner autour de son axe de pas ; et
- des moyens d'attache dudit pied de pale audit moyeu du rotor, comportant un organe élastiquement déformable en torsion autour dudit axe de pas,
- où ledit pied de pale est creux et ouvert à son extrémité interne ;
est remarquable en ce que :
- ledit organe élastiquement déformable en torsion est constitué par une butée élastique logée dans ledit pied de pale et susceptible d'agir à la manière d'une rotule d'action limitée, centrée sur ledit axe de pas ; et
- un tirant rigide relie ladite butée élastique audit moyeu du rotor.

Ainsi, une telle butée élastique élimine tout danger de rupture de fatigue en torsion. Elle peut être largement dimensionnée et peut offrir une grande durée de fonctionnement sans usure appréciable et sans jamais conduire à une rupture de fatigue brutale.

Par ailleurs, une telle butée élastique est particulièrement compacte et présente donc un faible encombrement, notamment radialement par rapport au rotor.

Cependant, pour diminuer encore plus l'encombrement radial du rotor, il est avantageux, ladite butée élastique comportant de façon connue une pluralité d'éléments lamifiés en élastomère disposés entre deux armatures, que :
- à l'intérieur dudit pied de pale, ladite butée élastique soit disposée de façon que l'une de ses armatures, dite externe, se trouve du côté de la partie profilée de ladite pale, tandis que l'autre desdites armatures, dite interne, se trouve du côté de l'axe du rotor ;
- ladite butée élastique comporte un évidement central, coaxial audit axe de pas ;
- ledit tirant rigide traverse avec jeu ledit évidement central et son extrémité externe, qui se trouve du côté de ladite partie profilée de pale, soit solidaire de l'armature externe de ladite butée élastique ; et
- l'armature interne de ladite butée élastique, traversée avec jeu par ledit tirant, soit solidaire de l'extrémité interne du pied de pale qui se trouve du côté de l'axe du rotor.

Ainsi, le faible encombrement de la butée élastique et du tirant permet de réduire fortement le diamètre du moyeu du rotor supportant les paliers d'appui des pales, ce qui conduit à une amélioration de la performance en poussée et, surtout, à une réduction de la masse du moyeu, ainsi que du support de la boîte de transmission (qui entraîne ledit rotor en rotation), qui se trouve dans le prolongement et derrière ledit moyeu.

Ladite butée élastique peut être sphérique, c'est-à-dire que ses éléments lamifiés en élastomère sont alors sphériques et centrés sur ledit axe de pas. Cependant, étant donné le faible débattement de ladite butée élastique, celle-ci peut être conique, c'est-à-dire que ses éléments lamifiés sont également coniques et centrés sur ledit axe de pas.

Par ailleurs, il est avantageux de prévoir un appui rotulien, centré sur ledit axe de pas, entre l'extrémité externe dudit tirant et l'extrémité externe dudit pied de pale.

Ainsi, en créant un tel appui pour l'extrémité externe du tirant à l'intérieur dudit pied de pale, on peut immobiliser ledit tirant et la butée élastique, chargée axialement par la force centrifuge, n'est soumise qu'à la torsion correspondant aux variations d'incidence.

Par ailleurs, grâce à cet appui, il devient possible de n'utiliser qu'un seul palier, disposé du côté de l'extrémité externe dudit pied de pale, pour articuler ledit pied de pale sur le moyeu. En effet, en rotation, les mouvements de battement de pale sont faibles (inférieurs à 1°) et les déformations correspondantes de butée élastique conduisent à des mouvements très faibles. De plus, à l'arrêt, les battements de pale sont limités par contact de l'armature interne de butée élastique avec ledit tirant.

On conçoit aisément que la suppression d'un palier de pale --par rapport à la technique antérieure-- apporte un allégement et une simplification appréciables du moyeu du rotor, qui peut par exemple être alors réalisé par emboutissage, comme une casserole. De plus, la suppression d'un palier élimine la plus grande partie des efforts de commande, celle qui résulte de la friction dans les paliers fortement chargés du fait de l'encastrement de pale. Il n'est donc plus nécessaire d'utiliser une servocommande, sans pour autant avoir recours à des masses d'équilibrage importantes sur les pales. Il en résulte, là encore, une simplification et un allégement. Ainsi, grâce à la présente invention, les moyens d'attache des pales sont plus simples, plus compacts, plus sûrs et moins coûteux que ceux de la technique antérieure.

Les figures du dessin annexé feront bien comprendre comment l'invention peut être réalisée. Sur ces figures, des références identiques désignent des éléments semblables.

La figure 1 est une vue, partiellement en coupe longitudinale, correspondant à la ligne I-I de la figure 2, d'une pale conforme à la présente invention, pourvue de ses moyens d'attache.

La figure 2 est une vue extérieure, tournée de 90° par rapport à la figure 1, de la pale montrée par ladite figure 1.

Les figures 3, 4 et 5 illustrent, partiellement en coupe, des variantes de réalisation de la pale des figures 1 et 2.

La figure 6 est une coupe partielle correspondant à la ligne VI-VI de la figure 5.

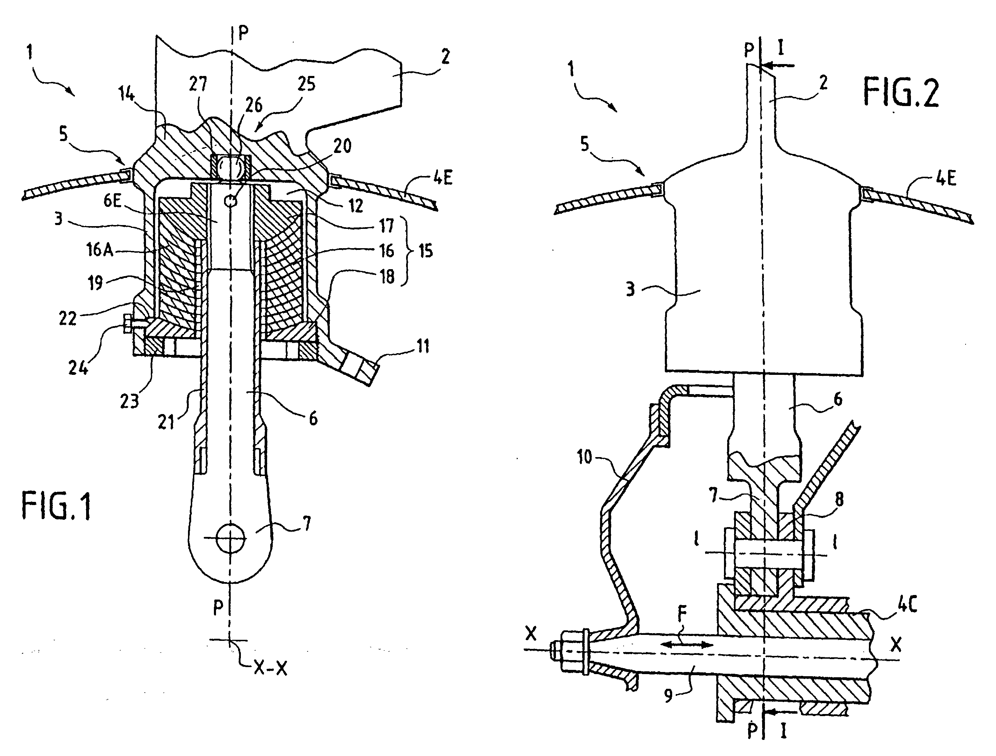

La pale de rotor 1, conforme à la présente invention et représentée sur les figures 1 et 2, comporte une partie profilée 2 (montrée partiellement) et un pied de pale 3. Elle est destinée à former, avec d'autres pales identiques, le rotor arrière anticouple d'un hélicoptère, le rotor tournant autour d'un axe X-X et comportant un moyeu constitué d'une partie centrale 4C (seulement représentée sur la figure 2) et d'une partie externe 4E.

Ledit pied de pale 3 est monté rotatif dans la partie de moyeu externe 4E par l'intermédiaire d'un palier unique 5 disposé du côté de ladite partie de pale profilée 2, pour permettre à ladite pale 1 de tourner autour de son axe de pas P-P. De plus, ladite pale 1 est attachée à la partie de moyeu centrale 4C par l'intermédiaire d'un tirant 6. A cet effet, l'extrémité libre 7 dudit tirant 6 est conformée en élément de chape, et elle coopère avec un élément de chape complémentaire 8 solidaire de ladite partie centrale 4C pour attacher ladite pale audit moyeu, la chape 7, 8 ayant un axe *ℓ-*ℓ parallèle à l'axe X-X. De façon connue, comme cela est représenté sur la figure 2, une tige 9, qui est coaxiale à l'axe X-X du rotor et qui peut coulisser parallèlement audit axe (voir la double flèche F), commande la rotation de ladite pale 1 autour de son axe de pas P-P, par l'intermédiaire d'une liaison 10, qui est solidaire, d'un côté de ladite tige 9 et, de l'autre, d'un doigt excentré 11, porté par le pied de pale 3.

Conformément à la présente invention :
- le pied de pale 3 est creux et définit un évidement intérieur 12, ouvert du côté interne (en direction de l'axe X-X) et obturé du côté externe (en direction de la partie profilée 2) par un fond 14 ; et
- dans l'évidement intérieur 12 du pied de pale 3 est logée une butée élastique sphérique 15, qui comporte un ensemble 16 d'éléments 16A en élastomère lamifiés et disposés entre une armature externe 17 et une armature interne 18 et qui est interposée entre la partie profilée 2 de la pale 1 et le tirant 6 pour assurer la fonction d'organe élastiquement déformable en torsion autour de l'axe de pas P-P.

La butée élastique sphérique 15 est centrée sur ledit axe de pas P-P et est capable d'un mouvement de rotule limité. Elle comporte un évidement central 19, coaxial à l'axe de pas P-P.

Le tirant rigide 6 traverse avec jeu l'évidement central 19 et son extrémité externe 6E est fixée sur l'armature externe 17 de la butée élastique 15. Cette armature externe 17 est par exemple réalisée en acier et la fixation peut être obtenue, comme représenté sur la figure 1, par vissage de l'extrémité externe filetée 6A dans l'armature externe 17, formant écrou. Une goupille 20 assure le blocage en rotation dudit tirant rigide par rapport à l'armature externe 17.

Une entretoise en alliage léger 21 est enfilée sur le tirant rigide 6, entre l'élément de chape 7 et l'armature externe 17, pour servir de butée de positionnement à cette dernière. L'entretoise 21 permet en outre d'assurer un bon allongement du tirant à l'assemblage vissé 6-17.

L'armature interne 18 de la butée élastique 15 est traversée avec jeu par ledit tirant et ladite entretoise 21 et est solidaire de l'extrémité interne du pied de pale 3. A cet effet, cette armature interne 18 est immobilisée dans l'évidement 12 du pied de pale 3 entre un épaulement 22 et une pièce 23, vissée dans ledit évidement 12. Le positionnement en rotation de l'armature interne 18 peut être obtenu par divers dispositifs, illustrés schématiquement sur la figure 1 par une vis pointeau 24.

Par ailleurs, un point d'appui 25, centré sur l'axe de pas P-P, est prévu entre l'extrémité externe 6E du tirant 6 et l'extrémité externe du pied de pale 3. Dans le mode de réalisation de la figure 1, ce point d'appui 25 est formé par une rotule 26 solidaire du tirant 6 et engagée dans une cage 27, logée dans le fond 14 de l'évidement 12.

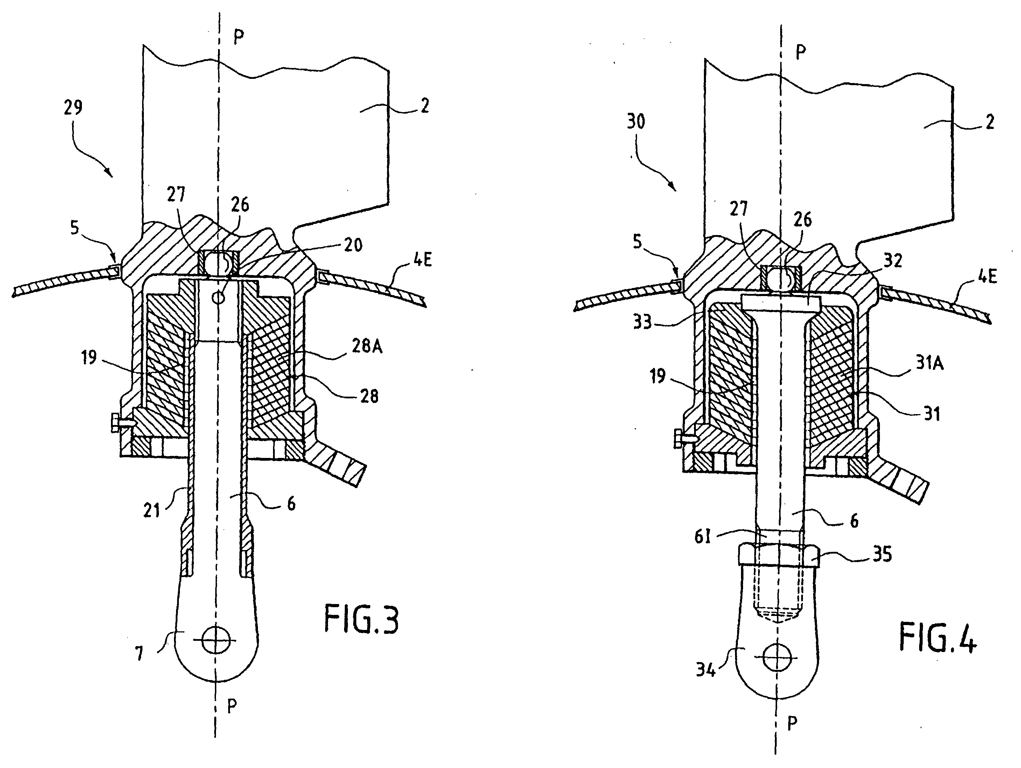

Les mouvements de rotule de la butée sphérique 15 sont très faibles, au maximum de 0,7°, et, par ailleurs, limités par le jeu existant dans l'évidement central 19 entre l'armature interne 18 et l'ensemble tirant 6 - entretoise 21. Par suite, la butée sphérique 15 peut être remplacée, comme cela est illustré sur la figure 3, par une butée plus simple 28, à éléments coniques 28A. Sur cette figure 3, la variante de réalisation 29 est identique au mode de réalisation 1, à l'exception du fait que la butée sphérique 15 est remplacée par la butée conique 28.

Dans la variante de réalisation 30 de la pale de rotor, conforme à la présente invention et montrée sur la figure 4, on retrouve les éléments déjà décrits en regard de la figure 1, aux exceptions suivantes :
- la butée 31 n'est plus sphérique, mais conique (comme sur la figure 3), c'est-à-dire que ses éléments 31A en élastomère sont coniques et centrés sur l'axe P-P ;
- le tirant 6 comporte, à son extrémité externe, une tête de soupape 32 retenant la butée conique 31, en prenant appui sur le côté externe de l'armature externe 33 de ladite butée ; et
- l'élément de chape 34, destiné à relier le tirant 6 à la partie centrale 4C du moyeu, se visse --avec un contre-écrou 35-- sur l'extrémité interne filetée 6I du tirant 6.

Dans ce cas, l'armature externe 33, qui ne comporte plus de filetage, peut être réalisée en alliage léger.

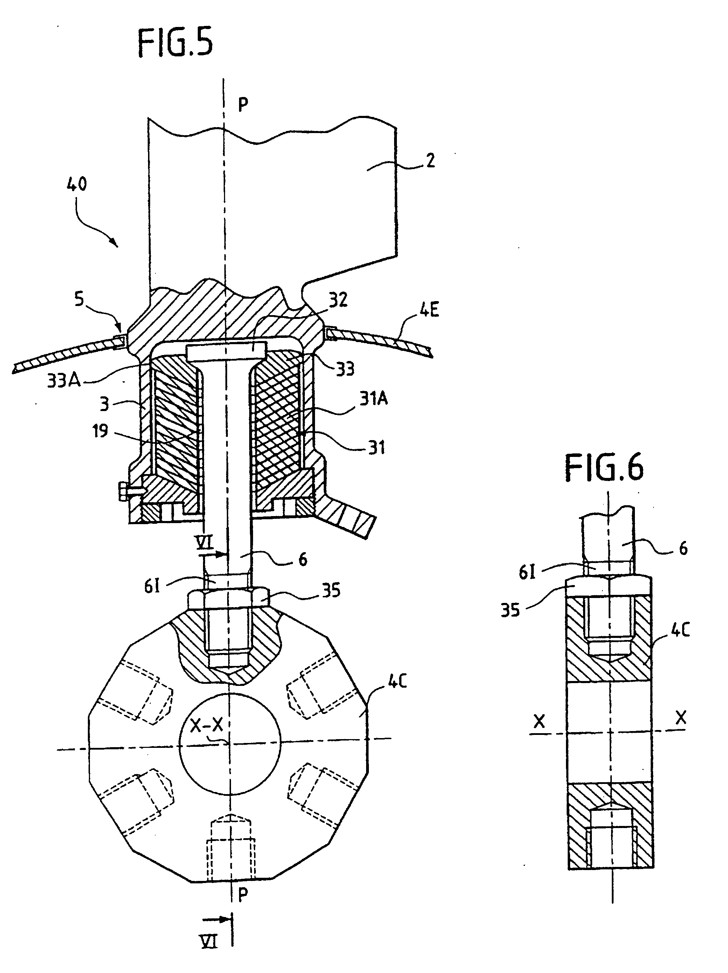

Le mode de réalisation 40 de la pale de rotor, conforme à la présente invention et montré par les figures 5 et 6, est semblable à la pale 30 de la figure 4 avec les différences suivantes :
- le point d'appui 25, 26, 27 est supprimé et remplacé par une portée sphérique annulaire 33A pratiquée à la périphérie de l'armature externe 33 de la butée élastique 31 et s'appuyant sur la paroi de l'évidement interne 12 ;
- l'extrémité interne filetée 61 du tirant 6 est reliée directement par vissage à la partie de moyeu centrale 4C, sans interposition de l'élément de chape 34, mais avec le contre-écrou 35.

## Revendications

1. Pale de rotor, notamment pour le rotor arrière anticouple d'un hélicoptère, comportant :
- un pied de pale (3) pour être monté rotatif dans le moyeu (4E) dudit rotor, pour permettre à ladite pale de tourner autour de son axe de pas (P-P) ; et
- des moyens d'attache dudit pied de pale (3) audit moyeu du rotor, comportant un organe élastiquement déformable en torsion autour dudit axe de pas,
- où ledit pied de pale (3) est creux et ouvert à son extrémité interne de manière à comporter un évidement intérieur (12) ;
**caractérisée en ce que** :
- ledit organe élastiquement déformable en torsion est constitué par une butée élastique (15, 28, 31) logée dans ledit évidement intérieur (12) dudit pied de pale et susceptible d'agir à la manière d'une rotule d'action limitée, centrée sur ledit axe de pas ; et
- un tirant rigide (6) relie ladite butée élastique audit moyeu (4C) du rotor.

2. Pale de rotor selon la revendication 1, dans laquelle ladite butée élastique comporte une pluralité d'éléments lamifiés en élastomère, disposés entre deux armatures,
**caractérisée en ce que** :
- à l'intérieur dudit pied de pale (3), ladite butée élastique est disposée de façon que l'une (17, 33) de ses armatures, dite externe, se trouve du côté de la partie profilée (2) de ladite pale, tandis que l'autre (18) desdites armatures, dite interne, se trouve du côté de l'axe (X-X) du rotor ;
- ladite butée élastique comporte un évidement central (19), coaxial audit axe de pas ;
- ledit tirant rigide (6) traverse avec jeu ledit évidement central et son extrémité externe (6E), qui se trouve du côté de ladite partie profilée de pale, est solidaire de l'armature externe de ladite butée élastique ; et
- l'armature interne (18) de ladite butée élastique, traversée avec jeu par ledit tirant, est solidaire de l'extrémité interne du pied de pale (3) qui se trouve du côté de l'axe (X-X) du rotor.

3. Pale de rotor selon l'une des revendications 1 ou 2,
**caractérisée en ce que** les éléments lamifiés en élastomère (16A) de ladite butée élastique (15) sont sphériques.

4. Pale de rotor selon l'une des revendications 1 ou 2,
**caractérisée en ce que** les éléments lamifiés en élastomère (28A, 31A) de ladite butée élastique (28, 31) sont coniques.

5. Pale selon l'une des revendications 2 à 4,
**caractérisée en ce qu'**un appui rotulien (25, 33A), centré sur ledit axe de pas (P-P), est prévu entre l'extrémité externe dudit tirant (6) et l'extrémité externe dudit pied de pale (3), qui se trouve du côté de ladite pale.

6. Pale selon la revendication 5,
**caractérisée en ce que** ledit pied de pale (3) est tourillonné sur ledit moyeu (4E) de rotor au moyen d'un palier unique (5), disposé du côté de l'extrémité externe dudit pied de pale.

7. Pale selon l'une des revendications 5 ou 6,
**caractérisée en ce que** ledit appui rotulien (25) comporte une rotule (26) solidaire de l'extrémité externe dudit tirant (6) et engagée dans une cage (27), pratiquée dans le fond dudit évidement intérieur du pied de pale.

8. Pale selon l'une des revendications 5 ou 6,
**caractérisée en ce que** ledit appui rotulien comporte une portée sphérique annulaire (33A) pratiquée à la périphérie de ladite armature externe (33) de la butée élastique (31) et s'appuyant sur la paroi dudit évidement intérieur (12).

9. Pale selon l'une des revendications 2 à 8,
**caractérisée en ce que** ledit tirant rigide (6) est vissé dans ladite armature externe (17) de la butée élastique (15, 28).

10. Pale selon la revendication 9,
**caractérisée en ce qu'**une entretoise (21) est disposée autour du tirant rigide (6), entre l'extrémité interne (7) de celui-ci et ladite armature externe (17) de la butée élastique (15, 28).

11. Pale selon l'une des revendications 1 à 8,
**caractérisée en ce que** l'extrémité externe du tirant rigide (6) est conformée en tête de soupape (32), retenant ladite butée élastique (31).

12. Pale selon l'une des revendications 1 à 11,
**caractérisée en ce que** l'extrémité interne (61) dudit tirant (6) porte un élément de chape (7, 34) susceptible de coopérer avec un élément de chape complémentaire (8) porté par ledit moyeu du rotor (4C) pour attacher ledit pied de pale audit moyeu.

13. Pale selon la revendication 12,
**caractérisée en ce que** ledit élément de chape (7) du tirant (6) est solidaire de l'extrémité interne (6I) de ce dernier.

14. Pale selon la revendication 12,
**caractérisée en ce que** ledit élément de chape (34) du tirant (6) est vissé sur l'extrémité interne filetée (61) dudit tirant.

15. Pale selon l'une des revendications 1 à 11,
**caractérisée en ce que** l'extrémité interne (6I) dudit tirant (6) est filetée et est reliée directement au moyeu du rotor (4C) par vissage.

## Patentansprüche

1. Rotorblatt, insbesondere für den hinteren Heckrotor eines Hubschraubers, welches umfasst:
- einen Fuß des Blattes (3), welcher drehbar in der Nabe (4E) des Rotors angebracht werden kann, um es dem Blatt zu ermöglichen, sich um seine Blattgelenkachse (P-P) zu drehen; und
- Mittel zur Befestigung des Fußes des Blattes (3) an der Nabe des Rotors, welche ein bei Drehung um die Blattgelenkachse elastisch verformbares Teil umfassen,
- wobei der Fuß des Blattes (3) hohl und an seinem Innen-Ende dergestalt offen ist, dass es eine innere Aussparung (12) aufweist,
**dadurch gekennzeichnet, dass**
- das bei Drehung elastisch verformbare Teil aus einem elastischen Axiallager (15, 28, 31) gebildet wird, welches in der inneren Aussparung (12) des Fußes des Blattes untergebracht ist und imstande ist, in der Art eines Kugelgelenks mit eingeschränkter Wirkung zu funktionieren, welches auf die Blattgelenkachse zentriert ist; und
- ein starrer Zugstab (6) das elastische Axiallager mit der Nabe (4C) des Rotors verbindet.

2. Rotorblatt nach Anspruch 1, bei welchem das elastische Axiallager eine Anzahl von lamellierten Elementen aus Elastomer umfasst, welche zwischen zwei Einlagen angeordnet sind,
**dadurch gekennzeichnet, dass**
- im Innern des Fußes des Blattes (3) das elastische Axiallager dergestalt angeordnet ist, dass die eine (17, 33) dieser Einlagen, die sogenannte äußere, sich auf der profilierten Seite (2) des Blattes befindet, während die andere (18) der Einlagen, die sogenannte innere, sich auf der Seite der Achse (X-X) des Rotors befindet;
- das elastische Axiallager eine zentrale Aussparung (19) aufweist, welche koaxial zur Blattgelenkachse verläuft;
- der starre Zugstab (6) mit Spiel durch die zentrale Aussparung führt und sein äußeres Ende (6E), welches sich auf der Seite des mit Profil versehenen Teils des Rotorblatts befindet, fest mit der äußeren Einlage des elastischen Axiallagers verbunden ist; und
- die innere Einlage (18) des elastischen Axiallagers, die mit Spiel vom Zugstab durchquert wird, fest mit dem inneren Ende des Fußes des Blattes (3) verbunden ist, das sich auf der Seite der Achse (X-X) des Rotors befindet.

3. Rotorblatt nach einem der Ansprüche 1 oder 2, **dadurch gekennzeichnet, dass** die lamellierten Elemente aus Elastomer (16A) des elastischen Axiallagers (15) kugelförmig sind.

4. Rotorblatt nach einem der Ansprüche 1 oder 2, **dadurch gekennzeichnet, dass** die lamellierten Elemente aus Elastomer (28A, 31A) des elastischen Axiallagers (28, 31) konisch sind.

5. Blatt nach einem der Ansprüche 2 bis 4, **dadurch gekennzeichnet, dass** ein Kipplager (25, 33A), welches auf der Blattgelenkachse (P-P) zentriert ist, zwischen dem äußeren Ende des Zugstabs (6) und dem äußeren Ende des auf der Seite des Blattes befindlichen Fußes des Blattes (3) vorgesehen ist.

6. Blatt nach Anspruch 5, **dadurch gekennzeichnet, dass** der Fuß des Blattes (3) auf der Nabe (4E) des Rotors mittels eines auf der Außenseite des Fußes des Blattes angeordneten Einzelzapfenlagers (5) zapfengelagert ist.

7. Blatt nach einem der Ansprüche 5 oder 6,
**dadurch gekennzeichnet, dass** das Kipplager (25) ein Kugelgelenk (26) umfasst, welches mit dem äußeren Ende des Zugstabs (6) fest verbunden ist und in einen Käfig (27) eingreift, der im Boden der inneren Aussparung des Fußes des Blattes ausgeführt ist.

8. Blatt nach einem der Ansprüche 5 oder 6,
**dadurch gekennzeichnet, dass** das Kipplager eine ringförmige kugelige Lagerfläche (33A) umfasst, die am Umfang der äußeren Einlage (33) des elastischen Axiallagers (31) ausgeführt ist und auf der Wand der inneren Aussparung (12) aufliegt.

9. Blatt nach einem der Ansprüche 2 bis 8,
**dadurch gekennzeichnet, dass** der starre Zugstab (6) in die äußere Einlage (17) des elastischen Axiallagers (15, 28) eingeschraubt ist.

10. Blatt nach Anspruch 9,
**dadurch gekennzeichnet, dass** eine Abstandshülse (21) um den starren Zugstab (6) zwischen dem inneren Ende (7) desselben und der äußeren Einlage (17) des elastischen Axiallagers (15, 28) vorhanden ist.

11. Blatt nach einem der Ansprüche 1 bis 8,
**dadurch gekennzeichnet, dass** das äußere Ende des starren Zugstabs (6) als Ventilteller (32) gestaltet ist, welcher das elastische Axiallager (31) hält.

12. Blatt nach einem der Ansprüche 1 bis 11,
**dadurch gekennzeichnet, dass** das innere Ende (6I) des Zugstabs (6) ein Gabelkopf-Element (7, 34) trägt, welches imstande ist, mit einem komplementären Gabelkopf-Element (8), welches auf der Nabe des Rotors (4C) sitzt, zusammenzuwirken, um den Fuß des Blattes an der Nabe anzubringen.

13. Blatt nach Anspruch 12,
**dadurch gekennzeichnet, dass** das Gabelkopf-Element (7) des Zugstabs (6) mit dem inneren Ende (6I) dieses Letzteren fest verbunden ist.

14. Blatt nach Anspruch 12,
**dadurch gekennzeichnet, dass** das Gabelkopf-Element (34) des Zugstabs (6) auf das innere, mit Gewinde versehene Ende (6I) des Zugstabs geschraubt ist.

15. Blatt nach einem der Ansprüche 1 bis 11,
**dadurch gekennzeichnet, dass** das innere Ende (6I) des Zugstabs (6) mit Gewinde versehen ist und direkt mit der Nabe des Rotors (4C) durch Verschraubung verbunden ist.

## Claims

1. Rotor blade, particularly for the antitorque tail rotor of a helicopter, comprising:
- a blade root (3) to be mounted so that it can rotate in the hub (4E) of said rotor, so as to allow said blade to rotate about its pitch axis (P-P); and
- means of attaching said blade root (3) to said rotor hub, including a member which is elastically deformable in terms of torsion about said pitch axis,
- wherein said blade root (3) is hollow and open at its internal end so as to have an interior recess (12),
**characterized in that**:
- said member which is elastically deformable in terms of torsion consists of an elastic stop (15, 28, 31) housed in said interior recess (12) of said blade root and is capable of acting as a limited-action ball joint centered on said pitch axis; and
- a rigid tie rod (6) connects said elastic stop to said rotor hub (4C).

2. Rotor blade according to claim 1, in which said elastic stop has a number of laminated elastomer elements arranged between two armatures,
**characterized in that**:
- said elastic stop is arranged inside said blade root (3) in such a way that one (17, 33) of its armatures, known as the outer armature, is on the same side as the profiled part (2) of said blade, while the other (18) of said armatures, known as the inner armature, is on the same side as the axis (X-X) of the rotor;
- said elastic stop has a central recess (19) which is coaxial with said pitch axis;
- said rigid tie rod (6) passes with clearance through said central recess and its outer end (6E), which is on the same side as said profiled part of the blade, is secured to the outer armature of said elastic stop; and
- the inner armature (18) of said elastic stop, through which said tie rod passes with clearance, is secured to the inner end of the blade root (3) which is on the same side as the axis (X-X) of the rotor.

3. Rotor blade according to one of claims 1 or 2,
**characterized in that** the laminated elastomer elements (16A) of said elastic stop (15) are spherical.

4. Rotor blade according to one of claims 1 or 2,
**characterized in that** the laminated elastomer elements (28A, 31A) of said elastic stop (28, 31) are conical.

5. Blade according to one of claims 2 to 4,
**characterized in that** a ball joint-type support (25, 33A), centered on said pitch axis (P-P), is provided between the outer end of said tie rod (6) and the outer end of said blade root (3), which is on the same side as said blade.

6. Blade according to claim 5,
**characterized in that** said blade root (3) is journal-mounted on said rotor hub (4E) by means of a single bearing (5), located on the outer end side of said blade root.

7. Blade according to one of claims 5 or 6,
**characterized in that** said ball joint-type support (25) includes a ball (26) secured to the outer end of said tie rod (6) and engaged in a cage (27) made in the closed end of said blade root interior recess.

8. Blade according to one of claims 5 or 6,
**characterized in that** said ball joint-type support includes an annular spherical bearing surface (33A) made at the periphery of said outer armature (33) of the elastic stop (31) and resting against the wall of said interior recess (12).

9. Blade according to one of claims 2 to 8,
**characterized in that** said rigid tie rod (6) is screwed into said outer armature (17) of the elastic stop (15, 28).

10. Blade according to claim 9,
**characterized in that** a spacer piece (21) is arranged around the rigid tie rod (6) between the inner end (7) thereof and said outer armature (17) of the elastic stop (15, 28).

11. Blade according to one of claims 1 to 8,
**characterized in that** the outer end of the rigid tie rod (6) is shaped like the head of a poppet valve (32), retaining said elastic stop (31).

12. Blade according to one of claims 1 to 11,
**characterized in that** the inner end (61) of said tie rod (6) bears a clevis element (7, 34) capable of cooperating with a complementary clevis element (8) borne by said rotor hub (4C) so as to attach said blade root to said hub.

13. Blade according to claim 12,
**characterized in that** said clevis element (7) of the tie rod (6) is secured to the inner end (61) thereof.

14. Blade according to claim 12,
**characterized in that** said clevis element (34) of the tie rod (6) is screwed on to the threaded inner end (61) of said tie rod.

15. Blade according to one of claims 1 to 11,
**characterized in that** the inner end (61) of said tie rod (6) is threaded and is connected directly to the rotor hub (4C) by screwing.
